## Europäisches Patentamt
## European Patent Office
## Office européen des brevets

(19)

(11) Veröffentlichungsnummer: **0 154 699**
**B1**

(12) **EUROPÄISCHE PATENTSCHRIFT**

(45) Veröffentlichungstag der Patentschrift:
**11.05.88**

(51) Int. Cl.⁴: **H 01 J 35/10**

(21) Anmeldenummer: **84115138.4**

(22) Anmeldetag: **11.12.84**

(54) **Drehanoden-Röntgenröhre.**

(30) Priorität: **28.02.84 DE 3407269**

(43) Veröffentlichungstag der Anmeldung:
**18.09.85 Patentblatt 85/38**

(45) Bekanntmachung des Hinweises auf die Patenterteilung:
**11.05.88 Patentblatt 88/19**

(84) Benannte Vertragsstaaten:
**CH DE FR LI**

(56) Entgegenhaltungen:
**DE - B - 2 716 079**
**FR - A - 2 452 782**
**FR - A - 2 456 383**
**FR - A - 2 494 496**
**FR - A - 2 518 805**

(73) Patentinhaber: **Siemens Aktiengesellschaft Berlin und München, Wittelsbacherplatz 2, D-8000 München 2 (DE)**

(72) Erfinder: **Ebersberger, Hans, Kotzenaurach Nr. 2, D-8531 Markt Erlbach (DE)**

### Beschreibung

Die Erfindung betrifft Drehanoden-Röntgenröhren nach dem Oberbegriff des Patentanspruchs 1. Derartige Röhren mit magnetisch gelagerter Anodenwelle sind etwa bekannt aus der US-PS 41 67 671.

Der Welle einer magnetisch gelagerten Drehanode einer Röntgenröhre sind neben den magnetischen Lagerungsmitteln zusätzlich auch noch mechanische Lager zugeordnet. Sie sind so bemessen, dass sie bei wirksamer magnetischer Lagerung der Antriebswelle nicht zur Lagerung der Antriebswelle beitragen und dienen zum Auffangen des Drehsystems, wenn die magnetische Halterung wegfällt, d.h., wenn die Anode «abstürzt». Da in diesem Falle die berührungsfreie Halterung der Welle aufhört, schlägt der Drehkörper an den Fanglagern an. Die Anode taumelt im Rahmen der bei der berührungsfreien Lagerung zwischen dem Drehsystem und den Fanglagern zur Ermöglichung berührungsfreien Laufes erforderlichen Abstände (Lose). Beim Absturz läuft daher die Anode unregelmässig, schlägt an verschiedenen Stellen der Fanglager an, was zu Beeinträchtigungen durch Vibrationen, Abrieb und Geräusch etc. führt.

Der Erfindung liegt die Aufgabe zugrunde, bei einer Drehanoden-Röntgenröhre der eingangs genannten Art eine Anodenlagerung vorzusehen, bei welcher auch nach Absturz in die Fanglager wenigstens weitgehend schlagvibrations- und abriebfreier Lauf der Anode gewährleistet bleiben. Diese Aufgabe wird erfindungsgemäss mittels der im Kennzeichen des Patentanspruchs 1 angegebenen Massnahmen gelöst. Die Unteransprüche haben vorteilhafte Weiterbildungen zum Gegenstand.

Nach der Erfindung wird eine günstige Gestaltung dadurch erhalten, dass bei unwirksamer magnetischer Lagerung die an den zusätzlichen Lagern liegende Berührungsfläche zwischen der Antriebswelle der Anode und dem Röhrenkolben an einer zur Drehachse der Anode symmetrischen konischen Fläche liegt. Dies ergibt z.B. eine Anordnung, bei der der beim Betrieb der magnetischen Lagerung der Drehanode zwischen rotierendem Teil und dem Fanglager vorhandene Spalt konische Form hat, etwa diejenige eines Kegelmantels, d.h. er wird von der Aussenwand eines konischen Steckers und der Innenwand eines darübergestülpten konischen Bechers begrenzt. Der Spalt wird bekanntlich freigehalten, um unvermeidliche Schwankungen aufzunehmen, die z.B. wegen geringfügiger Unebenheiten und Unwuchten etc. am Drehsystem auftreten. Wenn nun die konischen Teile so angeordnet sind, dass beim Absturz der Anode der Abstand aufgebraucht wird, indem der Steckerteil in das Becherteil bzw. umgekehrt das Becherteil über den Steckerteil fällt, so wird eine durch die Abschrägung gestützte stabile Halterung am Fanglager erhalten.

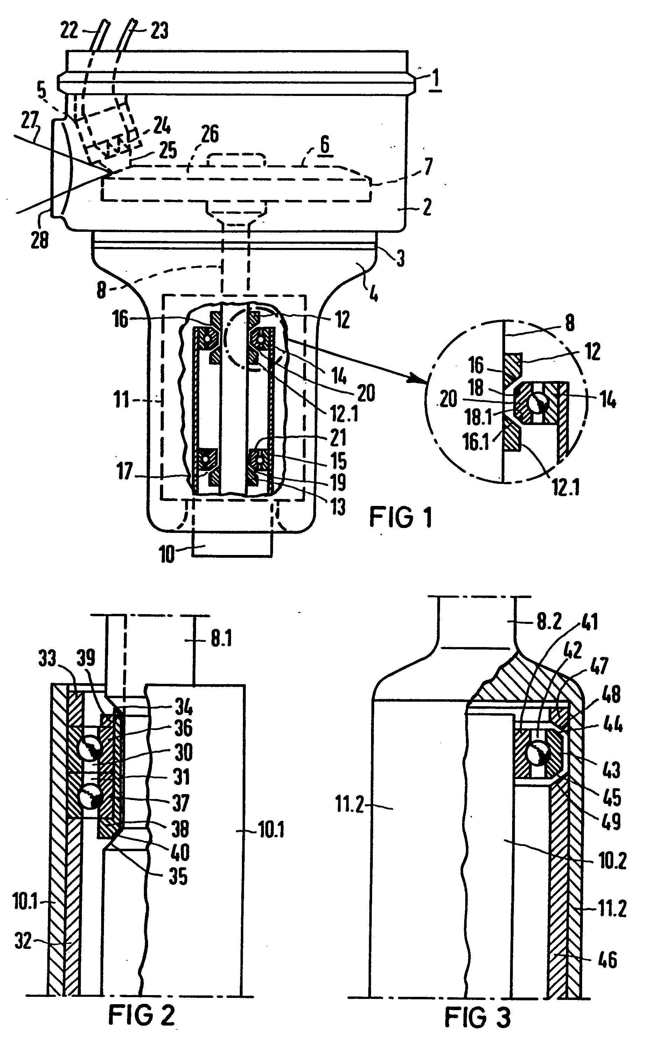

Zweckmässig werden zwischen dem rotierenden System und dem festen Teil des Röhrenkolbens reibungsmindernde Elemente untergebracht. In einfacher Weise kann dies etwa durch Verwendung eines Rollenkörperlagers, etwa eines Kugellagers, erreicht werden, so dass die bei Fanglagern übliche Konstruktion erhalten wird (vgl. z.B. US-PS 41 67 671, Bezugszahl 17 der Figuren 1 und 2). Als Basis für den Stecker bzw. den Becher der Fanglagereinrichtung kann dabei ein Laufring des Kugellagers dienen, je nachdem, ob der äussere oder innere Laufring die den konischen Teil ergebende Abschrägung aufweist bzw. mit einer derartigen Belegung versehen ist. Beim Abstürzen der Anode wird so die bei Drehanoden übliche Kugellagerhalterung der Anodenwelle erreicht. Da hierbei die zum Betrieb der Magnetlagerung erforderliche Lose wegfällt, sind auch die bei den bekannten Magnetlagern auftretenden Nachteile überwunden. Es sind lediglich die bei üblichen Drehanoden auftretenden losen Teilchen und Vibrationen zu erwarten. Ausserdem kann die Röhre wie die bekannten Drehanodenröhrchen unter Rotation der Anode am Kugellager ausgeheizt werden.

Bei einer senkrecht sich erstreckenden Anodenwelle genügt es, wenn ein konisches Teil und ein entsprechend konisch becherförmiges Teil einander gegenüberliegen, wobei die Spitzen der beiden konischen Teile nach unten weisen. Beim Absturz fällt dann jeweils das eine Teil in das andere und wird spielfrei festgehalten. Dies kann entweder das konische Teil sein, welches in das becherförmige Gegenstück fällt bzw. ein becherförmiges Teil, welches auf das konische Teil auffällt.

Eine universelle Halterung an den Absturzlagern wird erreicht, wenn gegeneinander gerichtete konische Teile vorgesehen werden. Diese gegeneinander gerichteten abgeschrägten Teile können bei einer Lagerung der Anode an zwei in Abstand voneinander liegenden Stellen an diesen beiden Stellen einander entgegengerichtet vorgesehen werden. Eine andere genauso wirkende Lösung wird erhalten, indem die einander entgegengerichteten konischen Flächen an einem Lager oder an einem zusätzlichen, an den Laufringen angebrachten Ring, etwa an den beiden Aussenkanten eines Laufringes bzw. des zusätzlichen Ringes, vorgesehen werden.

Als besonders günstig hat es sich erwiesen, wenn die schrägen Flächen auf einem Konus liegen, der an der Spitze einen Winkel von 90° hat, so dass die Seitenwände mit der Achse der Anodenantriebswelle einen Winkel von je 45° einschliessen. Dadurch wird eine Schrägung erhalten, die in der Mitte zwischen einem seitlichen Umkippen der Anodendrehachse liegt. Bei kleineren und grösseren Winkeln ist diese Symmetrie nicht gegeben.

Als Lose zwischen den Berührungsflächen der beiden konischen Teile hat sich bei üblichen Röntgenröhren ein Abstand von 0,2 bis 0,4 mm, insbesondere 0,25 mm, erwiesen. Diese Lose reicht in der Regel aus, ungehinderten Betrieb der magnetgelagerten Anode zu gestatten, weil unvermeidbare seitliche Abweichungen des Laufes der Anode unterhalb dieser Grössenordnung bleiben.

Weitere Vorteile und Einzelheiten der Erfindung werden nachfolgend anhand der in den Figuren dargestellten Ausführungsbeispiele weiter erläutert.

In der Figur 1 ist eine mit erfindungsgemäss gestalteten Fanglagern ausgestattete Röntgenröhre im Schaubild teilweise aufgebrochen dargestellt, in der Figur 2 eine Ausbildungsform, bei welcher die Fanglager auf einen Ring montiert sind, der auf beiden Seiten Abschrägungen aufweist und in der Figur 3 eine Ausbildungsform, bei welcher die Fanglager auf dem Anschlussstutzen der Anode sitzen und die Fangflächen an der Innenwand des Rotors liegen.

In der Figur 1 ist mit 1 eine Röntgenröhre bezeichnet, deren Kolben aus einem Metalltopf 2 besteht, dessen offene Seite an einer Naht 3 an einem gläsernen Teil 4 vakuumdicht angeschmolzen ist. Im Inneren des Kolbens der Röhre liegt in bekannter Weise eine Kathode 5 und eine Anodenanordnung 6. Diese besteht in ebenfalls bekannter Weise aus einem Anodenteller, der über eine Antriebswelle 8 in einen rohrförmigen, in den gläsernen Teil 4 eingeglasten Stutzen 10 reicht. Ausserdem ist an der Antriebswelle 8 noch der Rotor 11 angebracht. Um das Anodensystem 6 in Rotation versetzen zu können, ist für den Betrieb eine Magnetanordnung vorgesehen, die an sich bekannt ist, nicht zur eigentlichen Röhre gehört und deshalb der Übersichtlichkeit halber bei vorliegender Darstellung weggelassen ist. Als Fanglager sind zusätzliche mechanische Lager, d.h. die mit 14 und 15 bezeichneten Kugellager, im Stutzen 10 angebracht. Die Antriebswelle 8 weist am oberen Ende zu beiden Seiten des Lagers 14 je einen Ring 12 und 12.1 sowie am unteren Lager 15 einen Ring 13 auf, der, dem jeweiligen Lager 14, 15 zugewandt, eine Abschrägung 16, 16.1 und 17 besitzt, die jeweils einer Abschrägung 18, 18.1 und 19 der inneren Laufringe 20 und 21 der Lager 14, 15 gegenübersteht und zu diesen einen Abstand von 0,25 mm aufweist.

Beim Betrieb wird die Anode 6 in an sich bekannter Weise in Rotation versetzt, zwischen den Leitungen 22 und 23 eine Heizspannung angelegt und ausserdem zwischen der Leitung 22 und dem Stutzen 10 noch eine Beschleunigungsspannung, so dass aus der dann zum Glühen angeregten Kathodenwendel 24 ein Elektronenstrahl 25 ausgeht, der die Brennfleckbahn 26 des Anodentellers 7 beaufschlagt und dort Röntgenstrahlen erzeugt, die in einem Bündel 27 aus dem Fenster 28 der Röhre 1 austreten.

Beim Aufhören der magnetischen Halterung des Anodensystems 6 fällt dieses je nach Stellung der Röhre 1 im Raum auf einen der Ringe 12 oder 13, wobei entweder die Schrägungen 16 und 18 bzw. 17 und 19 aneinander zu liegen kommen. Es kann aber auch sein, insbesondere in horizontaler Lage, dass sowohl die Abschrägung 16 des Ringes 12 als auch die Abschrägung 17 des Ringes 13 mit der Abschrägung 18 des inneren Laufringes 20 des Lagers 14 und der Abschrägung 19 des inneren Laufringes 21 des Fanglagers 15 in Berührung kommen. Zwischen der horizontalen und der senkrechten Lage der Röhre sind Übergänge vorstellbar, bei welchen ebenfalls eine Berührung aller Schrägungen 16 bis 19 erfolgt.

Bei der in der Figur 2 dargestellten Ausführungsform ist das Lager 12 doppelt ausgelegt (dadurch geringere Lagerlose). Es weist zwei Kugellager 30 und 31 auf, die an der Innenwand des mit dem Stutzen 10 übereinstimmenden Stutzens 10.1 liegen und an Rohrstücken 32 und 33 gehalten sind. Die Welle 8.1 des Anodendrehsystems weist eine Ausnehmung auf, deren Seitenwände Abschrägungen 34 und 35 besitzen, die mit der Längsachse der Welle 8.1 einen Winkel von 45° einschliessen. Auf die inneren Laufringe 36, 37 der Lager 30 und 31 ist ein Ring 38 aufgezogen, dessen Innenseite der Ausnehmung in der Welle 8.1 nachgebildet ist und der seitliche 45°-Abschrägungen 39 und 40 aufweist. So wird eine Anordnung erhalten, die in ihrer Wirkung mit derjenigen der beiden Lager 14 und 15 der Figur 1 übereinstimmen.

Eine ähnliche Wirkung wird auch bei einer Ausbildungsform nach Figur 3 erhalten, bei welcher die Welle 8.2 am Rotor 11.2 endet. Der Rotor 11.2 ist direkt mit der Welle 8.2 des Anodentellers 7 verbunden. Der innere Laufring 41 eines Lagers 42 sitzt dabei am zentral in die Röhre 1 geführten Stutzen 10.2. Der äussere Laufring 43 des Lagers 42 ist an seinen äusseren Kanten mit je einer Abschrägung 44 und 45 versehen. Die Innenwand des Rotors 11.2 besteht aus Rohrstücken 46 und 47, die unter Freilassung einer Nut, d.h. einer Lose von 0,25 mm, an das Lager 42 heranreichen. Dort weisen die seitlichen Wände der Nut Abschrägungen 48 und 49 auf, welche den Abschrägungen 44 und 45 des äusseren Laufringes 43 des Lagers 42 zugeordnet sind. Auch hier wird eine Wirkung wie bei der Anordnung nach Figur 2 bzw. 1 erreicht. Der konstruktive Unterschied besteht nur in der zentralen Anordnung der Fanglager, von denen in der Figur 3 dasjenige dargestellt und mit 42 bezeichnet ist, das dem oberen, d.h. dem Lager 14 der Figur 1, entspricht. Das noch fehlende Lager kann analog Figur 1 oder 2 ausgebildet sein.

Bei den in den Figuren 1 bis 3 gezeichneten Ausführungsbeispielen sind die Fanglager 14, 15, 30, 31 und 42 fest in den Kolben der Röhre 1 eingebaut. Sie liegen mit ihren äusseren Laufringen am Stutzen 10 bzw. 10.1. Bei Figur 3 liegt der innere Laufring 41 an dem als Halterungsstift ausgebildeten Stutzen 10.2. Es ist aber auch möglich, die Anordnung der Lager umzukehren und sie mit dem drehenden Teil der Anodenanordnung 6, d.h. der Welle 8, 8.1 bzw. der Innenwand des Rotors 11.2, zu verbinden. Der Vorteil der in den Figuren 1 bis 3 dargestellten Beispiele liegt darin, dass die Lager 14, 15 und 30, 31 sowie 42 im Betriebszustand der Röhre fest mit dem Kolben verbunden sind und in Ruhe bleiben. Sie tragen nicht zu einer Erhöhung der Masse der rotierenden Anodenanordnung 6 bei.

## Patentansprüche

1. Drehanoden-Röntgenröhre mit in einem Hochvakuumkolben befindlicher Drehanode und der Drehanode gegenüberliegender Kathode, bei der die Antriebswelle der Drehanode magnetisch gelagert ist und sich zwischen der Antriebswelle und dem Hochvakuumkolben zusätzlich mechanische Lager als Fanglager befinden, wobei die Lager so bemessen sind, dass sie bei wirksamer magnetischer Lagerung nicht zur Lagerung der Antriebswelle beitragen, dadurch gekennzeichnet, dass bei unwirksamer magnetischer Lagerung die an den zusätzlichen Lagern liegende Berührungsfläche zwischen der Antriebswelle und dem Röhrenkolben an einer zur Drehachse der Anode symmetrischen konischen Fläche liegt.

2. Drehanoden-Röntgenröhre nach Anspruch 1, dadurch gekennzeichent, dass zwei nach Art eines konischen Steckers und eines darübergestülpten, an seiner Innenwand ebenso geformten Bechers gestaltete Führungen vorgesehen sind, wobei die aneinanderliegenden Flächen die Mantelflächen von Kegelstümpfen sind und die beiden Führungen mit den grossen Kegelstumpfflächen bzw. mit den kleinen Kegelstumpfflächen einander zugewandt sind.

3. Drehanoden-Röntgenröhre nach Anspruch 1, dadurch gekennzeichnet, dass die Basis wenigstens eines der konischen Teile einer Führung am Laufring eines Kugellagers liegt.

4. Drehanoden-Röntgenröhre nach Anspruch 3, dadurch gekennzeichnet, dass der Laufring an seinen Aussenkanten abgeschrägt ist.

5. Drehanoden-Röntgenröhre nach Anspruch 3, dadurch gekennzeichnet, dass die Abschrägung aus einer entsprechend abgeschrägten, an der freien Seite des Laufringes angebrachten Auflage, etwa einem auf den Laufring aufgezogenen Ring, besteht.

6. Drehanoden-Röntgenröhre nach Anspruch 5, dadurch gekennzeichnet, dass ein Fanglager aus zwei Kugellagern besteht und dass die Abschrägung auf einem, auf die freien Laufringe der Lager aufgezogenen Ring liegt.

7. Drehanoden-Röntgenröhre nach Anspruch 1, dadurch gekennzeichnet, dass die Abschrägung des konischen Körpers mit der Achse des Drehsystems einen Winkel von 45° einschliesst.

8. Drehanoden-Röntgenröhre nach Anspruch 1, dadurch gekennzeichnet, dass bei wirksamer magnetischer Lagerung an der Berührungsfläche ein Abstand von 0,2 bis 0,4 mm, insbesondere 0,25 mm, vorhanden ist.

9. Drehanoden-Röntenröhre nach Anspruch 2, dadurch gekennzeichnet, dass die Fanglager am Kolben und die Gegenfläche an der Antriebswelle befestigt sind.

## Claims

1. A rotating-anode X-ray tube having its rotating anode housed in a high-vacuum envelope opposit a cathode, in which the drive shaft of the rotating anode runs in magnetic bearings and additional mechanical bearings are situated between the drive shaft and the high-vacuum envelope as a safety measure, having such dimensions that they do not contribute to the support of the drive shaft when the magnetic bearing is effective, characterised in that, when magnetic support is ineffective, the contact surface resting between the addiotional drive shaft bearings and the tube envelope is a conical surface symmetrical about the rotating axis of the anode.

2. An X-ray tube as claimed in Claim 1, characterised in that two guides shaped like a conical plug and with a cup having a similarly shaped interior wall inverted over it are provided, whereby the surfaces which bear against each other are the outer surfaces of truncated cones and the two guides with the large surfaces of the truncated cones or the small surfaces of the truncated cones, as the case may be, are turned towards each other.

3. An X-ray tube as claimed in Claim 1, characterised in that the base of at least one of the conical parts of a guide forms a race of a ball-bearing.

4. An X-ray tube as claimed in Claim 3, characterised in that the race is bevelled at its outer edges.

5. An X-ray tube as claimed in Claim 3, characterised in that the bevelling is provided by an appropriately shaped overlay mounted on the free face of the race, in the manner of a ring set on the race.

6. An X-ray tube as claimed in Claim 5, characterised in that one safety support consists of two ball-bearings and that the bevelling is provided on one ring set on the free bearing race.

7. An X-ray tube as claimed in Claim 1, characterised in that the bevel of the conical component makes an angle of 45° with the rotation axis.

8. An X-ray tube as claimed in Claim 1, characterised in that when magnetic support is effective, the contact surface has a clearance of 0,2 to 0,4 mm, particularly 0,25 mm.

9. An X-ray tube as claimed in Claim 2, characterised in that the safety supports are fastened on the envelope and the opposing surface is on the drive shaft.

## Revendications

1. Tube à rayons X à anode tournante comportant une anode tournante située dans une enceinte à vide poussé, et une cathode située en vis-à-vis de l'anode tournante, et dans lequel l'arbre d'entraînement de l'anode tournante est supporté magnétiquement et en outre des paliers mécaniques formant paliers de butée sont disposés entre l'arbre d'entraînement, et l'enceinte à vide poussé, les paliers étant dimensionnés de telle sorte que, lorsque le soutien magnétique est actif, ils ne contribuent pas au support de l'arbre d'entraînement, caractérisé par le fait que, dans le cas où le soutien magnétique est inactif, la surface de contact présente sur les paliers supplémentaires entre l'arbre d'entraînement et l'enceinte du tube est formée par une surface conique symétrique par rapport à l'axe de rotation de l'anode.

2. Tube à rayons X à anode tournante selon la revendication 1, caractérisé en ce qu'il est prévu deux guides qui sont réalisés à la manière d'une broche conique et d'un pot emmanché sur cette broche et également conformé au niveau de sa paroi intérieure, les surfaces situées en vis-à-vis étant les surfaces enveloppes de troncs de cône et les deux guides se faisant face par les grandes surfaces des troncs de cônes ou par les petites surfaces des troncs de cône.

3. Tube à rayons X à anode tournante suivant la revendication 1, caractérisé par le fait que la base d'au moins l'une des parties coniques d'un guide èst située sur la bague de roulement d'un palier à billes.

4. Tube à rayons X à anode tournante suivant la revendication 3, caractérisé par le fait que la bague de roulement est biseautée sur son bord extérieur.

5. Tube à rayons X à anode tournante suivant la revendication 3, caractérisé par le fait que le biseau est constitué par une surface d'appui biseautée de façon correspondante et qui est prévue sur la face libre de la bague de roulement, par exemple un anneau rapporté sur la bague de roulement.

6. Tube à rayons X à anode tournante suivant la revendication 5, caractérisé par le fait qu'un palier de butée est constitué par deux paliers à billes et que le biseau est situé sur un anneau rapporté sur les deux bagues des paliers.

7. Tube à rayon X à anode tournante suivant la revendication 1, caractérisé par le fait que le biseau du corps conique fait un angle de 45° avec l'axe du système rotatif.

8. Tube à rayons X à anode tournante suivant la revendication 1, caractérisé par le fait que dans le cas où le soutien magnétique est actif, une distance de 0,2 à 0,4 mm et notamment de 0,25 mm est présente au niveau de la surface de contact.

9. Tube à rayons X à anode tournante suivant la revendication 2, caractérisé par le fait que les paliers de butée sont fixés sur l'enceinte et que la surface antagoniste est fixée sur l'arbe d'entraînement.

FIG 1

FIG 2

FIG 3

7